# EUROPEAN PATENT SPECIFICATION

(11) **EP 1 689 516 B1**
(45) Date of publication and mention of the grant of the patent: **28.11.2007**
(21) Application number: 05849819.7
(22) Date of filing: 15.12.2005
(51) Int. Cl.: B01D 63/12, B01D 65/02

(54) **THE SEPARATION OF SOLID PARTICLES FROM THE LIQUID IN WHICH THEY ARE DISPERSED**
ABTRENNUNG VON FESTEN PARTIKELN AUS DEN SIE ENTHALTENDEN DISPERSIONEN
SEPARATION DE PARTICULES SOLIDES DU LIQUIDE DANS LEQUEL ELLES SONT DISPERSEES

(30) Priority: 22.12.2004 ZA 200410306
(43) Date of publication of application: 16.08.2006
(73) Proprietor: Dressel Pte Ltd., Singapore 068894 (SG)
(72) Inventor: William Graham, 7150 Gordon's Bay (ZA)
(74) Representative: Harrison, Ivor Stanley
(86) International application number: PCT/ZA2005/000183
(87) International publication number: WO 2006/069405

(56) References cited:
- EP-A- 1 022 052
- WO-A-00/27511
- WO-A-03/031342
- US-A1- 2002 079 261
- PATENT ABSTRACTS OF JAPAN vol. 1998, no. 04, 31 March 1998 (1998-03-31) & JP 09 313899 A (NITTO DENKO CORP), 9 December 1997 (1997-12-09)

## Description

### FIELD OF THE INVENTION

This invention relates to the separation of solid particles from a liquid in which they are dispersed.

### BACKGROUND TO THE INVENTION

To remove fine, solid particles a few microns in size from water (or any other liquid) it is conventional to use semi-permeable materials. The materials used are porous to water molecules but the pores are sufficiently small to prevent solid particles passing through. The materials perform micro or ultra filtration depending on their pore size.

Conventionally a filter based on such material comprises an elongate core pipe which has rows of holes along it. Elongate leaves of semi-permeable material having one open side, but otherwise being in the form of sealed pockets, are fixed to the pipe with their open edges in communication with the rows of holes. There are mesh-like spacers between the pockets and in the pockets. The sealed pockets are wound tightly about the pipe, and the wound unit is slid into an elongate outer housing.

When water with entrained solid particles flows into the casing, it enters solids retention passages bounded between the leaves, the spacers between the pockets being in the solids retention passages. The water, but not the solids, permeates through the semi-permeable material into the pockets and thence to the pipe via the open edges of the pockets and the rows of holes.

After a period of use, the filter becomes blocked, or at least the flow rate decreases to such an extent that it is necessary to clean the filter. This is achieved by opening a valve which controls a waste exit from the casing, and feeding flushing water under pressure into the casing to sweep the water in the casing, and the solid particles, out of the casing through the waste exit.

EP-A-1022052, WO 03/031342 and JP 09 313899 A (Patent Abstracts of Japan, 1998, no. 04, 31 March 1998) all describe methods of flushing filter units of the type described.

The object of the present invention is to provide an improved method of operating a filter unit and an improved filter installation.

### BRIEF DESCRIPTION TO THE INVENTION

According to one aspect of the present invention there is provided a method of operating an upright filter unit which includes a membrane comprising a permeate pipe and water permeable leaves through which water passes to reach said permeate pipe, the method comprises feeding raw water to the lower end of the unit, extracting permeate water from the lower end of the unit, and maintaining an above atmospheric pressure in the upper end of the unit by means of a permanent connection to a supply of gas under pressure.

The gas, for the sake of economy, will normally be air but other gases, could be used.

To clean the membrane the method of operation comprises terminating the flow of raw water, opening a waste flow line communicating with the lower end of the unit and instituting flow of flushing water to the upper end of said unit whilst maintaining the supply of gas to the upper end of the unit so that water, gas and solid particles flow from said unit through said waste flow line.

The pressure can, during flushing of the filter unit, be maintained at a constant valve or can pulstae.

The present invention also provides an installation comprising an upright of filter unit which includes a membrane comprising a vertical permeate pipe and water permeable leaves through which water passes to reach said permeate pipe, an inlet at the lower end of the unit for raw water, an outlet at the lower end of the unit for permeate, valve means for closing-off the supply of raw water, an inlet at the upper end of the unit, a supply of gas under pressure which is permanently connected to the inlet at the upper end of the unit whilst the unit is operating to separate liquid from entrained solids, a flushing water flow pipe leading to the inlet at the upper end of the unit, valve means for normally closing said flushing water flow pipe and which valve means can be opened to connect said flushing water flow pipe to a source of flushing water under pressure when cleaning is to be undertaken, and a waste outlet at the lower end of the unit for through which flushing water and solid particles leave the unit.

The filter unit within the installation may consist of a membrane comprising a permeate pipe and water permeable leaves through which water passes to reach said permeate pipe, the membrane having an end cap at each end thereof, and a casing formed in situ by winding resin coated fibres around the membrane and caps.

The fibres are preferably in the form of glass fibres but other fibres such as carbon fibres and Kevlar fibres can be used.

### BRIEF DESCRIPTION OF THE DRAWINGS

For a better understanding of the present invention, and to show how the same may be carried into effect, reference will now be made, by way of example, to the accompanying drawings in which;
Figure 1 is a section through a filter unit in accordance with the present invention;
Figure 2 is an "exploded" view of the filter unit of Figure 1;
Figures 3 and 4 are pictorial views of opposite sides of a filter installation;
Figure 5 and 6 are side elevations of opposite sides of the filter installation;
Figure 7 is a top plan view of the filter installation;
Figure 8 and 9 are opposite end views of the filter installation; and
Figure 10 is a circuit diagram of the filter installation.

### DETAILED DESCRIPTION OF THE DRAWINGS

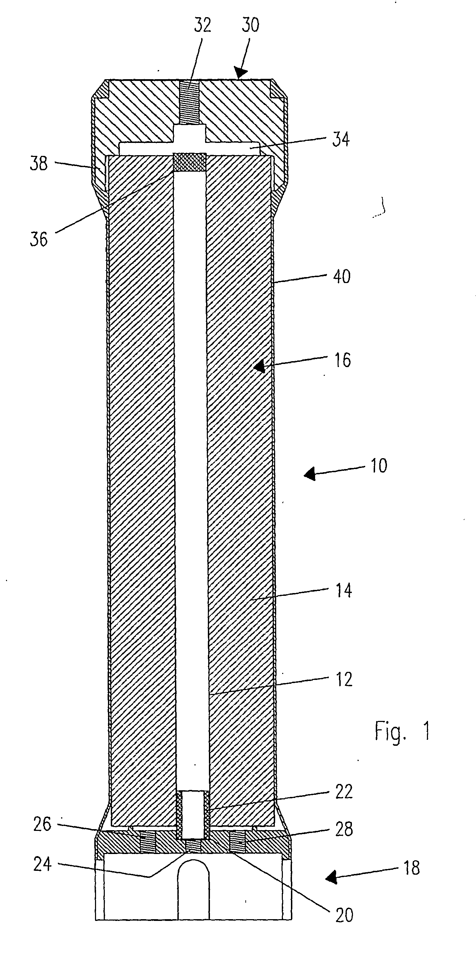

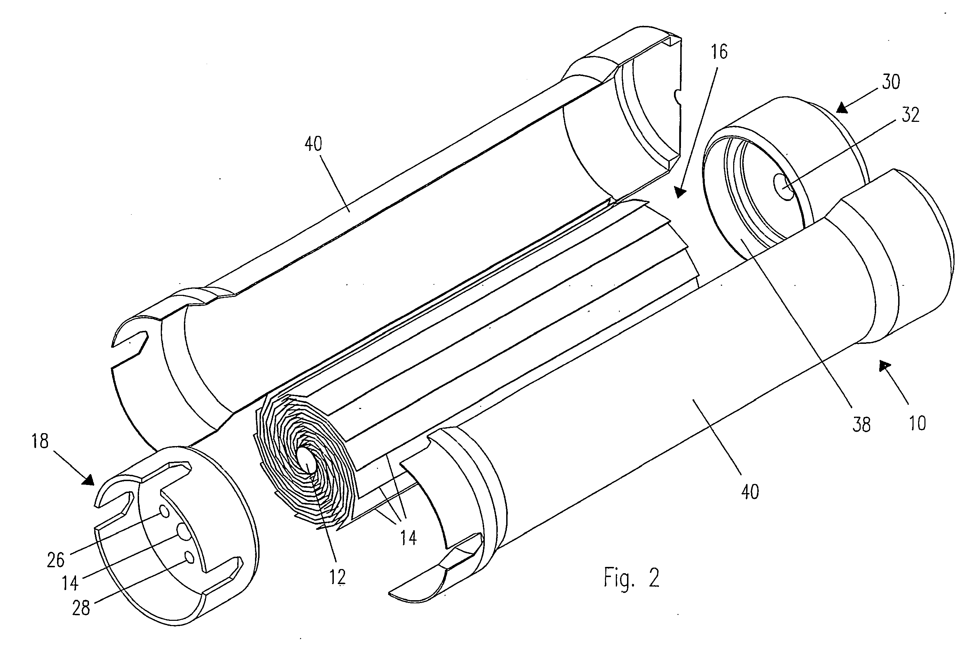

The filter unit 10 illustrated in Figures 1 and 2 comprises an elongate, vertical, perforated core pipe 12 around which elongate leaves 14 (Figure 2) are wound. Each leaf 14 is in the form of a sealed pocket and is fabricated using semi-permeable material which permits water but not solid particles to pass through it. The inner edge of each pocket is open and it is this edge that is attached to the pipe 12. The pockets communicate with the interior of the pipe 12 via the multitude of perforations in the pipe 12. The construction of the pipe 12 and leaves 14 is conventional. In accordance with conventional nomenclature in the art, the structure comprising the pipe (designated 12) and water permeable leaves (designated 14) will be referred to as a "membrane". The membrane is designated 16.

The filter unit, as illustrated in Figure 1, further includes an end cap 18 at the lower end thereof. The end cap 18 has a central socket 20 which receives a tube 22. The tube 22 penetrates into the pipe 12 and connects the end cap 18 to the pipe 12. An outlet bore 24 in the end cap 18 communicates with the interior of the tube 22 and hence with the interior of the pipe 12 and enables permeate which has entered the pipe 12 to flow from the filter unit 10. The tube 22 temporarily connects the end cap 18 to the membrane 16.

The end cap 18 additionally has two more bores 26, 28. The bore 26 is the raw water feed inlet and the bore 28 is the flushing outlet. It is through the bore 28 that solid particles are swept from the casing during the cleaning procedure as will be described hereinafter. There can if desired be more than one bore 26 and more than one bore 28.

At the upper end of the filter unit 10 there is a further end cap 30. The end cap 30 has an axial bore 32 through it to which a supply of air under pressure (not shown in Figures 1 and 2) is attached. There is a space 34 between the end cap 30 and the membrane 16. The upper end of the core pipe 12 is closed by a plug 36.

To fabricate the filter unit 10, the membrane 16 has the two end caps 18, 30 fitted to it and the composite structure is mounted on a rotatable mandrel (not shown). The mandrel comprises two co-axial, axially spaced shafts which enter the bores 24 and 32 thereby rotatably to mount the end caps 18, 20 and the membrane 16.

The end cap 30 includes a sleeve 38 in which the end of the membrane 16 is fitted thereby providing the requisite temporary connection between the cap 30 and the membrane 16. The mandrel is rotated and a casing 40 is fabricated by winding resin coated glass or other fibre strands about the membrane 16 and end caps 18, 30. The casing 40 joins the membrane 16 to the end caps 18, 30 thereby to form an integrated unit which does not have any space between the outer surface of the membrane 16 and the inner surface of the casing 40.

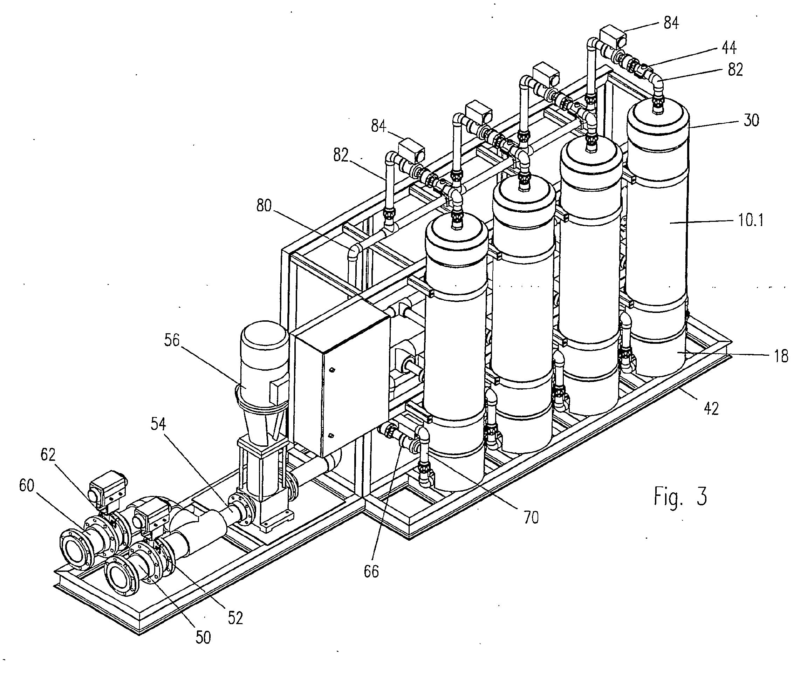

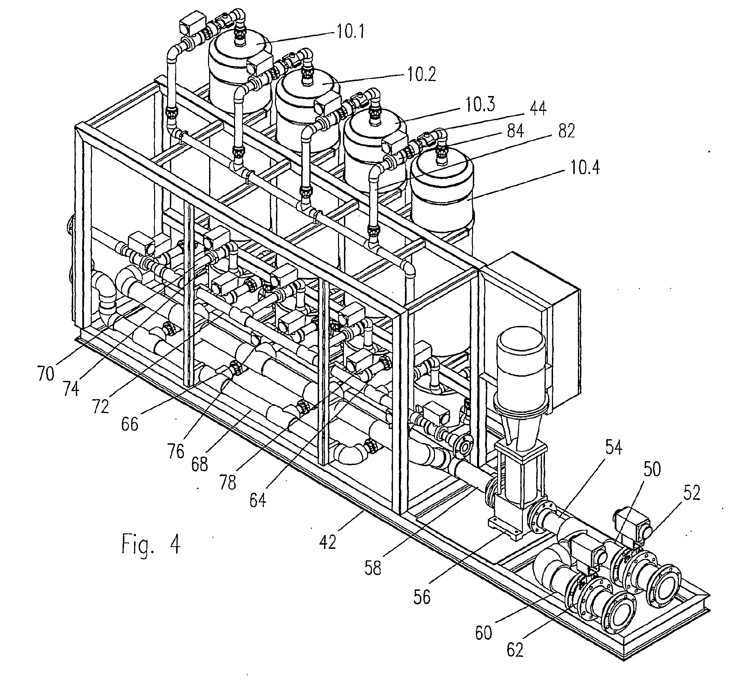

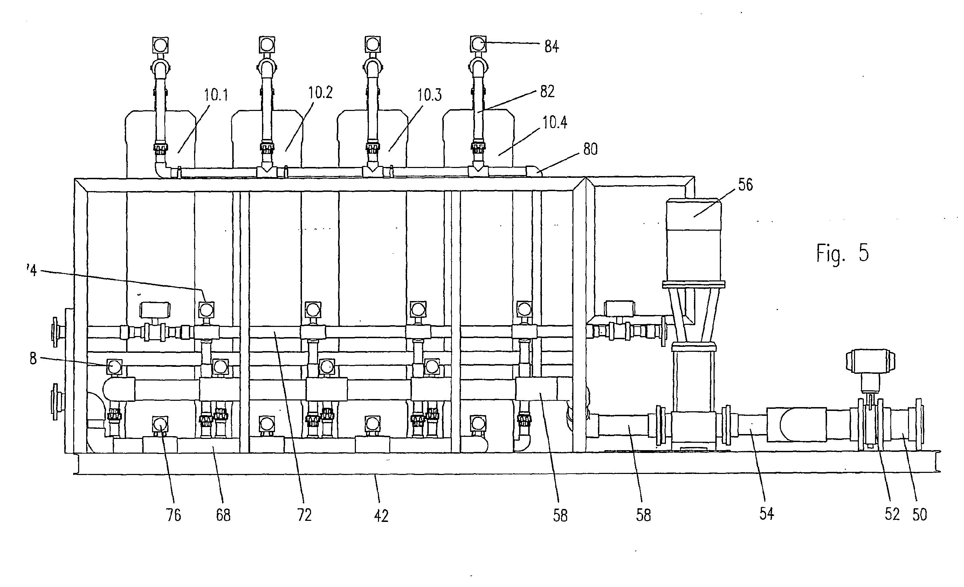

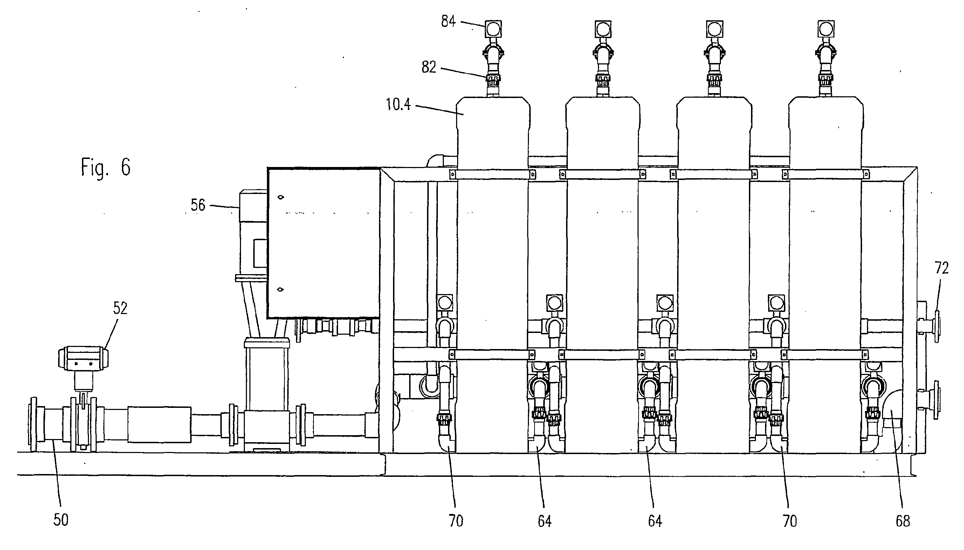

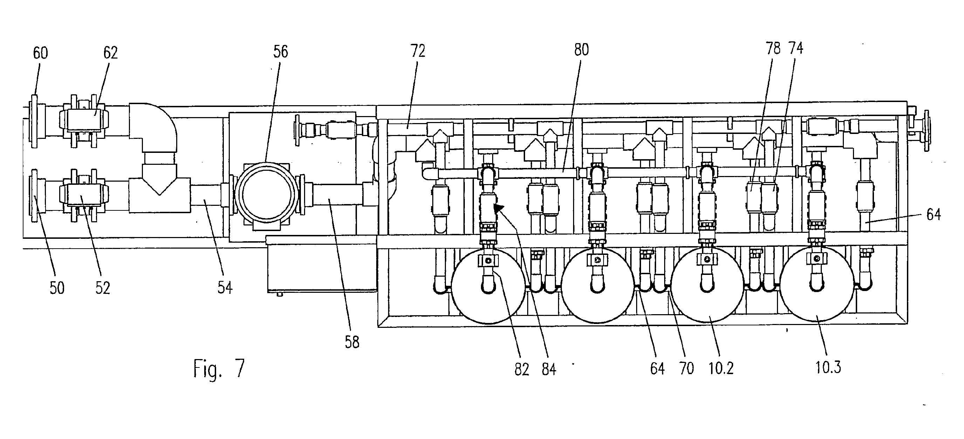

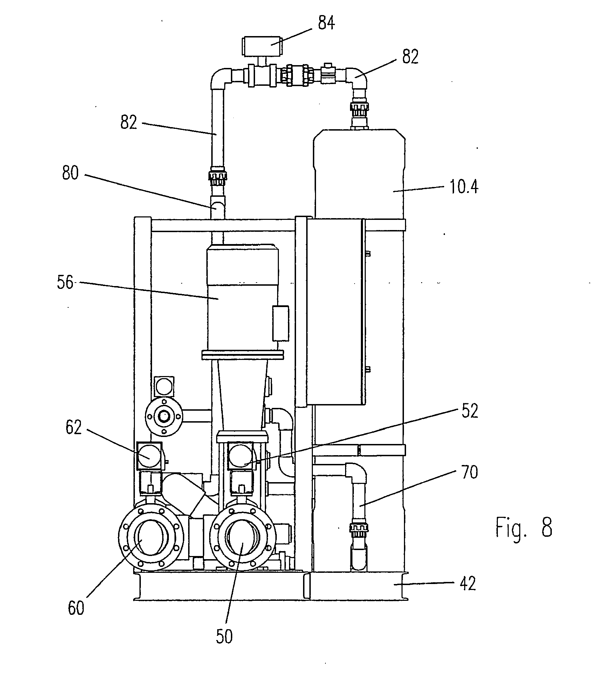

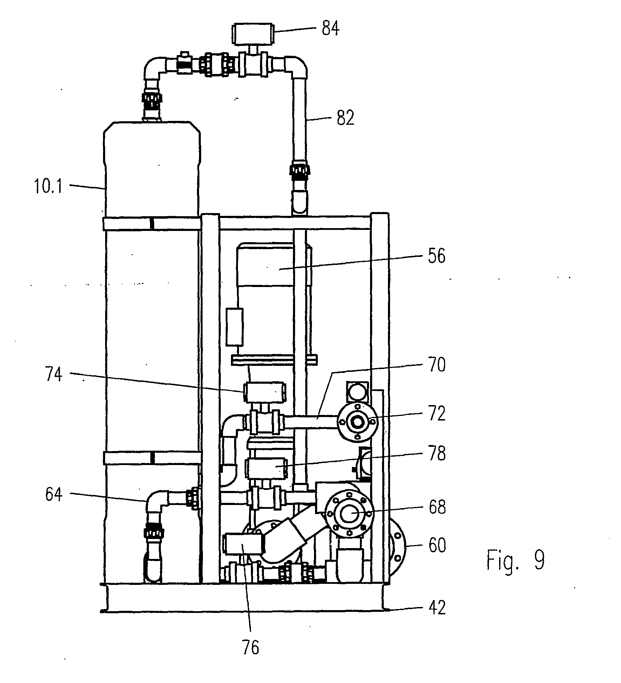

Turning now to Figures 3 to 10, the filter installation illustrated comprises a base frame 42 on which all the remaining components of the installation are mounted.

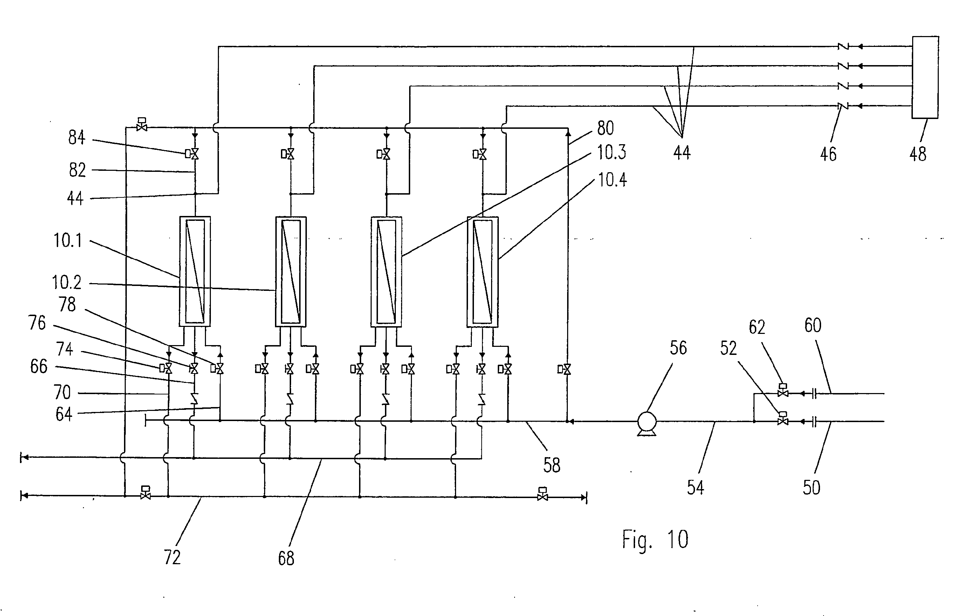

Four filter units 10.1, 10.2, 10.3 and 10.4 of the form described above are mounted on the frame 42. Pipes 44 are connected to the inlet bores 32 of the four filter units. Each pipe 44 leads to a valve 46 (Figure 10) which controls flow from an air supply 48.

The water to be treated enters via an inlet 50 and flows through a valve 52 to a pipe 54 which connects to the suction side of a pump 56. The pressure side of the pump is connected to a manifold 58. There is a second inlet 60 for flushing water and a valve 62 is provided between the inlet 60 and the pipe 54.

The manifold 58 is connected by four branch pipes 64 to the bores 26 of units 10.1, 10.2 etc. Thus the raw water flows into the solids retention passages of the membranes 16. Each bore 24 is connected to an outlet pipe 66 and the pipes 66 lead to a permeate outlet manifold 68. The other bore 28 of each end cap 18 is connected to a pipe 70, and the pipes 70 lead to a manifold 72. There are valves 74 in the pipes 70, valves 76 in the pipes 66 and valves 78 in the pipes 64.

A pipe 80 connects the manifold 58 to branch pipes 82 which lead to the inlet bores 32 at the upper ends of the units 10.1, 10.2 etc. There are normally closed valves 84 in the branch pipes 82. The pipes 82 join the pipes 44 so that the bores 32, for flushing purposes, can be connected simultaneously to the air supply designated 48 and to the clean water supply 60.

In normal operation the raw water with solid particles in it is pumped by the pump 56 into the manifold 58, then into the pipes 64, through the bores 26 and into the membranes 16. The water which flows into the membranes 16 permeates through the leaves 14 and exits via the pipes 12, tubes 22 and bores 24. From the bores 24 the water flows to the pipes 66 and thence to the manifold 68 via the valves 76.

The upper ends of the units 10.1, 10.2 etc are permanently connected to the air supply 48 thereby to maintain a pressure at above atmospheric in each unit 10.1, 10.2 etc. The pressure of the raw feed water at the bores 26 is sufficient to balance the air pressure in such manner that the water fills the casings 40 substantially to the top whilst leaving an air space above the water.

When the filter units become clogged, the valve 52 is shut and the valve 62 is opened. Simultaneously the valves 74 and 84 are opened and the valves 76, 78 closed. The valves 74, 84, in normal operation, are closed and the valves 76, 78 are normally open. Flushing water flows from the pump 56 to the manifold 58 and then to the pipe 80. From the pipe 80 the flushing water flows through the pipes 82 to the bores 32 with the incoming air which was able to start flowing through the units immediately the valves 78 were closed to remove water pressure from the lower ends of the membranes.

The air and flushing water flows through the solids retention passages of the membranes, out through the bores 28 to the pipes 70 and then to the manifold 72 carrying the filtered-out particles with it.

Air under pressure is constantly supplied to the upper end of each filter unit. During flushing the air pressure can be maintained at a constant value or can be caused to pulsate.

## Claims

1. A method of operating an upright filter unit (10) which includes a membrane (16) comprising a permeate pipe (12) and water permeable leaves (14) through which water passes to reach said permeate pipe, the method comprising feeding raw feed water to the lower end of the unit (10) and extracting permeate water from the lower end of the unit, **characterised by** maintaining an above atmospheric pressure in the upper end of the unit (10) by means of a permanent connection to a supply (48) of gas under pressure.

2. A method as claimed in claim 1, wherein, to clean the membrane (16), the method of operation comprises terminating the flow of raw feed water, opening a waste flow line (66) communicating with the lower end of the unit and instituting flow of flushing water to the upper end of said unit whilst maintaining the gas supply to the upper end of the unit so that water, gas and solid particles flow from said unit through said waste flow line.

3. A method as claimed in claim 2, wherein the pressure of the gas supply pulsates during flushing.

4. An installation comprising a filter unit (10) which includes a membrane (16) comprising a vertical permeate pipe (12) and water permeable leaves (14) through which water passes to reach said permeate pipe, an inlet (26) at the lower end of the unit for raw feed water, an outlet (24) at the lower end of the unit for permeate, valve means (78) for closing-off the supply (64) of raw water, an inlet (32) at the upper end of the unit, a supply (48) of gas under pressure which is permanently connected to said inlet (32) at the upper end of the unit whilst the unit is operating to separate liquid from entrained solids, a flushing water flow pipe (82) leading to the inlet (32) at the upper end of the unit, valve means (84) for normally closing said flushing water flow pipe and which valve means can be opened to connect said flushing water flow pipe to a source of flushing water under pressure when cleaning is to be undertaken, and a waste outlet (28) at the lower end of the unit through which flushing water and solid particles leave the unit.

5. An installation according to claim 4, in which the filter unit comprises a membrane (16) comprising a permeate pipe (12) and water permeable leaves (14) through which water passes to reach said permeate pipe, the membrane having an end cap (18, 30) at each end thereof, and a casing (40) formed in situ by winding resin coated fibres around the membrane and caps.

## Patentansprüche

1. Verfahren zum Betrieb einer stehenden Filtereinheit (10) mit einer Membran (16), die ein Permeatrohr (12) und wasserdurchlässige Blätter (14) umfasst, durch die hindurch Wasser an das Permeatrohr (12) verläuft, wobei das Verfahren das Zuführen von Speisewasser im Rohzustand an das untere Ende der Einheit (10) und das Extrahieren von Permeatwasser aus dem unteren Ende der Einheit umfasst, **dadurch gekennzeichnet, dass** im oberen Ende der Einheit (10) mittels einer Dauerverbindung zu einem Vorrat (48) von Druckgas ein Druck über atmosphärischem Druck aufrechterhalten wird.

2. Verfahren nach Anspruch 1, **dadurch gekennzeichnet, dass** zur Reinigung der Membran (16) das Betriebsverfahren folgende Schritte umfasst: Unterbrechen des Zuflusses von Speisewasser im Rohzustand,
Öffnen einer Abwasserleitung (66), die an das untere Ende der Einheit angeschlossen ist, und Anlegen eines Spülwasserstroms an das obere Ende der Einheit unter Beibehaltung der Gaszufuhr an das obere Ende der Einheit, so dass Wasser, Gas und Feststoffteilchen über die Abwasserleitung aus der Einheit ausfließen.

3. Verfahren nach Anspruch 2, **dadurch gekennzeichnet, dass** der Druck des Gasvorrats während des Spülvorgangs pulsiert.

4. Anlage, die folgendes umfasst: eine Filtereinheit (10) mit einer Membran (16), die ein senkrechtes Permeatrohr (12) und wasserdurchlässige Blätter (14) umfasst, durch die hindurch Wasser an das Permeatrohr verläuft, einen Einlass (26) am unteren Ende der Einheit für Speisewasser im Rohzustand, einen Auslass (24) am unteren Ende der Einheit für Permeat, ein Ventilmittel (78) zum Absperren der Rohwasserzufuhr (64), einen Einlass (32) am oberen Ende der Einheit, einen Druckgasvorrat (48), der dauerhaft an den Einlass (32) am oberen Ende der Einheit angeschlossen ist, während die Einheit in ihrem Betrieb Flüssigkeit von den darin mitgeführten Feststoffen trennt, eine Spülwasservorlaufleitung (82), die zum Einlass (32) am oberen Ende der Einheit führt, ein Ventilmittel (84) zum Schließen der Spülwasservorlaufleitung im Normalfall, das geöffnet werden kann, um zu Reinigungszwecken die Spülwasservorlaufleitung mit einer Quelle von unter Druck stehendem Spülwasser zu verbinden, und einen Abwasserauslass (28) am unteren Ende der Einheit, über den Spülwasser und Feststoffteilchen aus der Einheit austreten.

5. Anlage nach Anspruch 4, **dadurch gekennzeichnet, dass** die Filtereinheit eine Membran (16) mit einem Permeatrohr (12) und wasserdurchlässigen Blättern (14) umfasst, durch die hindurch Wasser an das Permeatrohr verläuft, wobei die Membran an jedem ihrer Enden mit einer Verschlusskappe (18, 30) versehen ist und ein Gehäuse (40) aufweist, das in situ durch Umwickeln der Membran und Kappen mit harzbeschichteten Fasern gebildet wird.

## Revendications

1. Procédé d'exploitation d'une unité de filtre verticale (10) qui comprend une membrane (16) comprenant un tuyau de filtrage (12) et des feuilles perméables à l'eau (14) que l'eau traverse pour atteindre ledit tuyau de filtrage, le procédé comprenant l'étape consistant à fournir de l'eau d'alimentation brute à l'extrémité inférieure de l'unité (10) et l'étape consistant à extraire l'eau de filtrage de l'extrémité inférieure de l'unité, **caractérisé par** le maintien d'une pression supérieure à la pression atmosphérique à l'extrémité supérieure de l'unité (10) au moyen d'une connexion permanente à une alimentation (48) de gaz pressurisé.

2. Procédé selon la revendication 1, dans lequel, pour nettoyer la membrane (16), le procédé d'exploitation comprend l'étape consistant à terminer le flux d'eau d'alimentation brute, l'étape consistant à ouvrir une conduite d'écoulement de déchets (66) communiquant avec l'extrémité inférieure de l'unité et l'étape consistant à instituer le flux d'eau de lavage à l'extrémité supérieure de ladite unité tout en maintenant l'alimentation de gaz à l'extrémité supérieure de l'unité de manière à ce que l'eau, le gaz et les particules solides s'écoulent de ladite unité à travers la dite conduite d'écoulement de déchets.

3. Procédé selon la revendication 2, dans lequel la pression de l'alimentation de gaz vibre pendant le lavage.

4. Installation comprenant une unité de filtre (10) qui comprend une membrane (16) comprenant un tuyau de filtrage vertical (12) et des feuilles perméables à l'eau (14) que l'eau traverse pour atteindre ledit tuyau de filtrage, une entrée (26) à l'extrémité inférieure de l'unité pour l'eau d'alimentation brute, une sortie (24) à l'extrémité inférieure de l'unité pour le filtrage, des moyens de valves (78) pour fermer l'alimentation (64) d'eau brute, une entrée (32) à l'extrémité supérieure de l'unité, une alimentation (48) de gaz pressurisé qui est connectée de manière permanente à ladite entrée (32) à l'extrémité supérieure de l'unité pendant que l'unité fonctionne pour séparer le liquide des solides entraînés, un tuyau d'écoulement d'eau de lavage (82) conduisant à l'entrée (32) à l'extrémité supérieure de l'unité, des moyens de valves (84) pour fermer normalement ledit tuyau d'écoulement d'eau de lavage et lesdits moyens de valves pouvant être ouverts pour connecter ledit tuyau d'écoulement d'eau de lavage à une source d'eau de lavage pressurisée lorsque le nettoyage doit être entrepris, et une sortie de déchets (28) à l'extrémité inférieure de l'unité à travers laquelle l'eau de lavage et les particules solides quittent l'unité.

5. Installation selon la revendication 4, dans laquelle l'unité de filtre comprend une membrane (16) comprenant un tuyau de filtrage (12) et des feuilles perméables à l'eau (14) que l'eau traverse pour atteindre ledit tuyau de filtrage, la membrane ayant un bouchon d'extrémité (18, 30) à chaque extrémité de celle-ci, et un carter (40) formé in situ en enroulant des fibres enduites de résine autour de la membrane et des bouchons.
